# EUROPEAN PATENT APPLICATION

(11) **EP 4 838 994 A1**
(43) Date of publication of application: **11.11.2026**
(21) Application number: 24916584.6
(22) Date of filing: 26.11.2024
(51) Int. Cl.: H04W 74/08

(54) **MULTI-ACCESS POINT TRANSMISSION METHOD, ACCESS POINT DEVICE, AND COMPUTER MEDIUM**

(30) Priority: 12.01.2024 CN 202410053136
(71) Applicant: Sanechips Technology Co., Ltd., Shenzhen, Guangdong 518055 (CN)
(72) Inventor: CHENG, Jianfei, Shenzhen, Guangdong 518055 (CN); SUN, Bo, Shenzhen, Guangdong 518055 (CN); LIU, Zhe, Shenzhen, Guangdong 518055 (CN); CHEN, Yu, Shenzhen, Guangdong 518055 (CN); FENG, Aijuan, Shenzhen, Guangdong 518055 (CN)
(74) Representative: Canzler & Bergmeier Patentanwälte Partnerschaft mbB
(86) International application number: PCT/CN2024/134418
(87) International publication number: WO 2025/148534

(57) **Abstract**

Provided in the present application is a multi-access point transmission method. The method comprises: in response to a trigger frame of a first access point, a second access point together with the first access point executing coordinated multi-access-point transmission; and after the second access point executes the coordinated multi-access-point transmission and confirms that the transmission has been successful, updating a channel contention parameter of the second access point, so as to reduce the probability of the second access point accessing a channel again, wherein the channel contention parameter is used for performing contention to obtain channel resources. Further provided in the present application are an access point device and a computer-readable storage medium.

## Description

### TECHNICAL FIELD

The present disclosure relates to the field of communications, and specifically relates to a multi-access point transmission method, an access point device, and a computer-readable storage medium.

### BACKGROUND

The multi-access point coordination technology refers to a technology which provides better coverage, capacity, and performance through cooperation and coordination of multiple access points (APs). The conventional single-access point deployment may face issues such as limited coverage and signal interference. In contrast, multi-access point coordination connects multiple APs to the same wireless network to implement cooperative behavior, thereby solving the problems such as heavy network load and severe network overlap.

However, in current multi-access point coordination technologies, an AP may access a channel without a carrier sense multiple access with collision avoidance (CSMA/CA) mechanism, which may severely affect the channel access fairness of conventional APs or other APs that do not adopt multi-access point coordination. No relevant solution has been proposed yet regarding the problem of channel access fairness among APs in the existing art.

### SUMMARY

An object of the present disclosure is to provide a multi-access point transmission method, an access point device, and a computer-readable storage medium which can at least solve the problem of channel access fairness among access points.

The present disclosure provides a multi-access point transmission method, including: in response to a trigger frame of a first access point, performing multi-access point coordinated transmission by a second access point together with the first access point; and after the second access point performs the multi-access point coordinated transmission and confirms that the transmission is successful, updating a channel contention parameter of the second access point to reduce a probability of the second access point accessing a channel again, where the channel contention parameter is used in contention for channel resources.

The present disclosure further provides an access point device, including: a communication unit, a processor, and a memory, wherein the memory has a computer program stored thereon, and the computer program, when executed by the processor, causes the processor to implement the multi-access point transmission method according to any embodiment of the present disclosure.

The present disclosure further provides a computer-readable storage medium having a computer program stored thereon which, when executed by a processor, causes the processor to implement the multi-access point transmission method according to any embodiment of the present disclosure.

According to the multi-access point transmission method, the access point device, and the computer-readable storage medium of the present disclosure, after an access point sends data by the coordinated transmission technology, a penalty mechanism is used to update the channel contention parameter of the access point, thereby ensuring the channel access fairness between conventional access points or other access points not adopting coordinated transmission and access points adopting coordinated transmission.

### BRIEF DESCRIPTION OF DRAWINGS

Accompanying drawings are provided for further understanding of the present disclosure and constitute a part of the specification. Hereinafter, these drawings are intended to explain the technical solutions of the present disclosure together with the following specific implementations, but should not be considered as a limitation of the present disclosure. In the drawings:
FIG. 1 is a schematic diagram of a WLAN;
FIG. 2 schematically shows a CSMA/CA method used by a node to access a channel;
FIG. 3 is a schematic diagram of multi-access point coordinated transmission;
FIG. 4 shows main operations performed by a conventional 802.11 device in an MAC layer upon receiving data to be sent;
FIG. 5 shows a flowchart of a multi-access point transmission method according to an embodiment of the present disclosure;
FIG. 6 shows another flowchart of a multi-access point transmission method according to an embodiment of the present disclosure;
FIG. 7 shows another flowchart of a multi-access point transmission method according to an embodiment of the present disclosure;
FIG. 8 shows another flowchart of a multi-access point transmission method according to an embodiment of the present disclosure;
FIG. 9 shows another flowchart of a multi-access point transmission method according to an embodiment of the present disclosure;
FIG. 10 shows another flowchart of a multi-access point transmission method according to an embodiment of the present disclosure;
FIG. 11 shows another flowchart of a multi-access point transmission method according to an embodiment of the present disclosure;
FIG. 12 shows another flowchart of a multi-access point transmission method according to an embodiment of the present disclosure;
FIG. 13 shows another flowchart of a multi-access point transmission method according to an embodiment of the present disclosure;
FIG. 14 shows another flowchart of a multi-access point transmission method according to an embodiment of the present disclosure;
FIG. 15 shows a block diagram of an access point device according to an embodiment of the present disclosure; and
FIG. 16 shows a block diagram of a computer-readable storage medium according to an embodiment of the present disclosure.

### DETAIL DESCRIPTION OF EMBODIMENTS

To improve understanding of the technical solution of the present disclosure for those skilled in the art, exemplary embodiments will be described more sufficiently below with reference to the accompanying drawings, but which may be specifically embodied in different forms and should not be construed as limited to the embodiments set forth herein. These embodiments are provided so that the present disclosure will be thorough and complete, and will fully convey the scope of the present disclosure to those skilled in the art. It should be appreciated that the drawings are only intended to illustrate the embodiments of the present disclosure, and the dimensions of the elements or parts shown in the drawings are not drawn to actual scale.

As used herein, the term "and/or" includes any and all combinations of one or more of the associated listed items.

The terminology used herein is for the purpose of describing particular example embodiments only, and is not intended to be limiting of the claimed subject matter. As used herein, the singular forms "a", "an" and "the" are intended to include the plural forms as well, unless the context clearly indicates otherwise. It will be further understood that the terms "include" and/or "including ...", when used in this specification, specify the presence of the stated features, integers, steps, operations, elements, and/or components, but do not preclude the presence or addition of one or more other features, integers, steps, operations, elements, components, and/or groups thereof.

It will be understood that, although the terms "first", "second" and the like may be used herein to describe various elements, components, regions, layers and/or sections, these elements, components, regions, layers and/or sections should not be limited by these terms. These terms are only used to distinguish one element, component, region, layer or section from another element, component, region, layer or section. Therefore, a first element, component, region, layer or section discussed below may also be referred to as a second element, component, region, layer or section without departing from the teachings disclosed herein. Further, the first element, component, region, layer or section in one embodiment may be different from the first element, component, region, layer or section in another embodiment.

Unless otherwise defined, all terms (including technical and scientific terms) used herein have the same meaning as commonly understood by one of ordinary skill in the art to which the presently disclosed subject matter belongs. It will be further understood that terms, such as those defined in commonly used dictionaries, should be interpreted as having a meaning that is consistent with their meanings in the context of the relevant art and will not be interpreted in an idealized or overly formal sense unless expressly so defined herein.

It should also be understood that the description of features or aspects in each exemplary embodiment should generally be considered applicable to other similar features or aspects in other exemplary embodiments, unless the context clearly dictates otherwise. The various embodiments of the present disclosure and various features thereof may be combined with each other without conflict.

In recent years, with the rapid development of computers and the Internet, the wireless local area network (WLAN) technology has gained increasing attention. The WLAN technology is based on short-range wireless communication technology, and allows mobile devices such as smartphones, smart computers, laptops, multimedia players, and the like to wirelessly access the Internet in homes, companies, or specific service areas.

The WLAN adopts the technology defined by the Institute of Electrical and Electronics Engineers (IEEE) 802.11 series of standards, including medium access control (MAC) and physical layer (PHY) protocols. IEEE 802.11 has commercialized or developed various technical standards to meet growing network demands. However, with the explosive application of the WLAN, the WLAN deployment is becoming increasingly dense, while the network load is also increasing and the network overlap is more severe. Therefore, the conventional frequency reuse-based network deployment technologies can no longer meet the demands, and the efficiency of WLANs shows a clear downward trend.

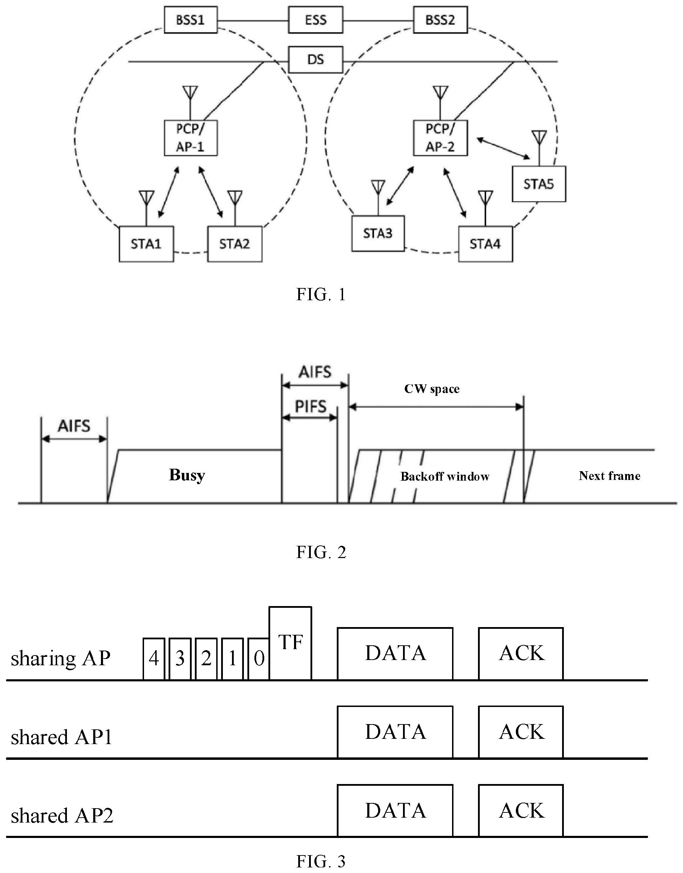

FIG. 1 is a schematic diagram of a WLAN.

As shown in FIG. 1, the WLAN includes one or more basic service sets (BSSs), each of which represents a set of devices that are successfully associated and communicated with each other. Different BSSs can be distinguished by BSS identification information. The BSS identification information includes a BSSID carried in a MAC frame header and a BSS Color carried in a PHY frame header. As shown in FIG. 1, the BSS includes one or more stations STA1, STA2, STA3, STA4 and STA5, personal BSS control points/access points (PCP/AP) PCP/AP-1 and PCP/AP-2 which provide access services, and a distribution system (DS) connecting a plurality of PCP/APs.

The station (e.g., STA1 to STA5) is a device complying with provisions of the IEEE 802.11 standard. The station may be a wireless terminal device, such as a laptop, a smartphone, a tablet, or any other device supporting wireless connectivity. The station may be a client or an access point in a wireless network. In the 802.11 standard, stations communicate with each other via wireless channels, and may perform operations including data transmission, broadcast message reception, roaming, and the like. Each station has a unique physical address called MAC address, which is used for identification and addressing in the wireless network.

The PCP/AP (e.g., PCP/AP-1 and PCP/AP-2) is used as an entity through which an associated station accesses the DS. In a BSS mode, a station may scan wireless channels to search for and connect to a nearby PCP/AP. A non-AP station communicates with other stations through a PCP/AP, and may further access wired network resources through the PCP/AP. Besides the BSS mode, the PCP/AP may also be used in an ad-hoc network, where multiple stations can directly perform point-to-point or many-to-many communication to form an ad-hoc wireless network. The PCP/AP may be used as a personal BSS control point (PCP) concept. In the context of the present application, the PCP/AP broadly includes APs, base stations and evolved node B (eNodeB). In addition, the PCP/AP may further include various types of wireless communication terminals that perform allocation of wireless resources and scheduling of multiple wireless communication terminals.

The 802.11 MAC layer protocol uses a distributed coordination function (DCF) and relies on CSMA/CA. The CSMA/CA requires a device to perform channel sensing before sending data, and determines whether to send the data or perform a backoff operation based on a sensing result. If the channel is occupied, the device waits for a random period of time and then attempts to send the data again. This random waiting time is referred to as backoff time. The backoff time is calculated by an exponential backoff algorithm, which ensures the channel access fairness among devices and reduces the probability of collision.

FIG. 2 schematically shows a CSMA/CA method used by a node to access a channel.

As shown in FIG. 2, before sending data, a wireless device firstly senses a wireless channel to detect whether other devices are sending data. If a sensed signal strength is greater than a predetermined strength threshold, the channel is considered busy, and the wireless device should delay channel access. This process is called clear channel assessment (CCA), and the predetermined strength threshold is referred to as CCA threshold. If no signal is sensed or the signal strength is less than the CCA threshold, the channel is considered idle.

When the channel is idle, the wireless device needs to perform a backoff process of waiting for the channel to remain idle for a period of time. This period of time is called DCF inter frame space (IFS), or is replaced by an arbitration inter frame space (AIFS). The minimum AIFS may be equal to a point coordination function (PCF) inter frame space (PIFS). The backoff process consists of a random number of backoff slots. In each slot, the wireless device continuously detects a busy/idle state of channels, and when the number of backoff slots decreases to 0, data is sent over the corresponding channel. However, a collision may occur when the wireless device and another device attempt to access the channel simultaneously. Devices that face a collision are each reassigned a number of backoff slots to repeat the above process. The reassigned number of backoff slots is randomly selected within a backoff window [0, CW]. In the case of a collision, a contention window (CW) doubles to [0, 2*CW]. Through the CSMA/CA mechanism described above, collisions between wireless devices can be avoided during data transmission over a shared wireless channel, thereby improving the transmission efficiency and ensuring that wireless resources are fairly shared among multiple devices.

The multi-access point coordination technology refers to a technology which provides better coverage, capacity, and performance through cooperation and coordination of multiple APs. The conventional single-AP deployment may face issues such as limited coverage and signal interference. In contrast, multi-access point coordination connects multiple APs to the same wireless network to implement cooperative behavior, thereby solving the problems such as heavy network load and severe network overlap.

The multi-access point coordinated transmission technology refers to a technology where multiple access points form a coordinated transmission set for cooperative and coordinated transmission. The multi-access point coordinated transmission technology may be divided into coordinated transmission and joint transmission. The coordinated transmission means that multiple access points share wireless resources such as frequency, space, or time, and send data to multiple stations respectively using technologies like coordinated beam forming (C-BF), coordinated spatial reuse (C-SR), coordinated orthogonal frequency division multiple access (C-OFDMA), and coordinated time division multiple access (C-TDMA). The joint transmission means that multiple access points share wireless resources such as frequency, space, or time, and simultaneously send data to the same station using technologies like joint beam forming (J-BF) or joint multi-user multiple-input multiple-output (J-MUMIMO). Then, according to a specific policy, the station combines the data received from multiple access points into the finally received data.

FIG. 3 is a schematic diagram of multi-access point coordinated transmission.

As shown in FIG. 3, the multiple access points may be divided into two categories: master AP (or sharing AP) and slave AP (or shared AP). The master AP refers to an AP responsible for coordinating and controlling other APs in multi-access point coordinated transmission. The master AP is used as a coordinator responsible for scheduling the transmissions of other APs and ensuring cooperation and interoperability among them. The slave AP refers to an AP controlled and scheduled by the master AP in multi-access point coordinated transmission. The slave AP receives instructions from the master AP, and performs transmission operations according to the instructions. Different slave APs are coordinated by the master AP to avoid collisions and improve the transmission efficiency. During data transmission, the slave AP may perform operations such as slot allocation, power control, transmission time adjustment, and the like according to instructions from the master AP to ensure smooth multi-access point coordinated transmission.

Typically, the roles of master AP and slave AP may be determined based on initialization negotiation of the coordinated transmission set or network topology, AP processing capability, AP location, coverage, and other factors, or an AP that first completes the backoff process and attempts to access the channel in the CSMA/CA mechanism may be used as the master AP. In the former method, the roles of master AP and slave AP (relative to a network lifecycle) are usually permanent or semi-permanent, while in the latter method, the roles of master AP and slave AP change dynamically.

As shown in FIG. 3, the master AP accesses the channel through the CSMA/CA mechanism and sends a trigger frame (TF). Typically, the trigger frame carries indication information for the slave AP (i.e., shared AP1 and shared AP2 in FIG. 3). Afterwards, the master AP and the slave AP simultaneously access the channel to perform multi-access point coordinated transmission, i.e., the master AP and the slave AP send data (DATA) and receive acknowledgement messages (ACK) respectively.

The 802.11n protocol introduces the enhanced distributed channel access (EDCA) mechanism, which defines traffic priorities and four corresponding access categories (ACs). Devices can obtain channel access opportunities at their respective priority levels. Higher priority traffic has a shorter backoff window and a longer transmission opportunity, thereby obtaining faster channel access and lower latency.

The EDCA is configured to extend or enhance the DCF function. The EDCA supports different priorities of traffic and provides different channel access priorities for the corresponding traffic. The EDCA is a primary channel access mechanism for IEEE 802.11, featuring distributed and easy deployment. The EDCA supports four ACs, each of which has an independent data buffer queue and a set of channel contention parameters, where values of the parameters are related to the priority of the AC.

Each AC may be used as an independent DCF contention entity including an independent backoff entity. Therefore, the backoff entity of each AC is associated with the corresponding data buffer queue and calculates the corresponding queue backoff value, thereby obtaining data transmission opportunities over at least one channel. The ACs within the same node contend with each other for transmission opportunities.

By setting different channel contention parameters among ACs, such as different contention windows [CWmin, CWmax], different AIFSs, and different transmission opportunity (TXOP) durations, quality of service differentiation among different ACs is achieved.

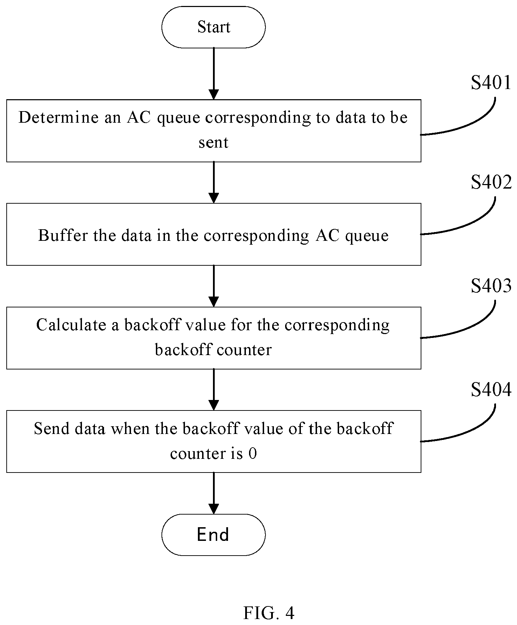

FIG. 4 shows main operations performed by a conventional 802.11 device in an MAC layer upon receiving data to be sent. As shown in FIG. 4, the main operations performed include the following operations S401 to S404.

In operation S401, an AC queue corresponding to data to be sent is determined.

Each AC corresponds to one AC queue. When the data to be sent reaches the MAC layer, it is determined which AC queue the data belongs to. In an 802.11 architecture node, this is typically done by checking a user priority (UP) of the data.

In operation S402, the data is buffered in the corresponding AC queue.

In operation S403, if the AC queue is empty before operation S402, a new backoff value is calculated for the corresponding backoff counter.

Each AC queue corresponds to one backoff counter. When the AC queue is empty, the corresponding backoff counter is inactive. When there is data buffered in the AC queue, a state of the backoff counter is changed to active, and a new backoff value is calculated for the backoff counter. The new backoff value is determined by selecting a random value within [0, CW], where CW is a contention window of the current AC. The CW selects a congestion window value within the range [CWmin, CWmax].

In operation S404, data is sent when the backoff value of the backoff counter is 0.

When the backoff value of the backoff counter reduces to 0, the corresponding AC may attempt to access the channel to send data.

As described above, multi-access point coordinated transmission may be performed in a wireless network. The master AP may trigger one or more slave APs to perform multi-access point coordinated transmission. The master AP accesses the channel via the CSMA/CA or EDCA mechanism, and sends a trigger frame to trigger the multi-access point coordinated transmission. Each slave AP may access the channel via the CSMA/CA or EDCA mechanism respectively to send corresponding data. If the multi-access point coordinated transmission is triggered during the process of a corresponding slave AP accessing the channel independently, the slave AP may suspend its independent access process and perform the multi-access point coordinated transmission. Therefore, compared to conventional terminals, the slave APs in the multi-access point coordinated transmission have more competitive advantages due to the presence of both an independent transmission opportunity and a multi-access point coordinated transmission opportunity triggered by the master AP.

Traditional access points use the CSMA/CA mechanism to access a channel, and sense activities on the channel to avoid collisions, thereby ensuring fair sharing of channel resources. However, in the current multi-access point coordination technology, some APs (e.g., slave APs) may bypass the CSMA/CA mechanism and directly access the channel (e.g., performing multi-access point coordinated transmission in response to a trigger frame from the master AP), which may seriously affect the channel access fairness of conventional APs or other APs not adopting the coordination technology.

Such unfairness may have serious influences on the network. Other conventional APs or APs not adopting the coordination technology need to rely on the CSMA/CA mechanism to achieve fair channel sharing, but the APs bypassing the mechanism may occupy most of the channel resources, causing reduced transmission rates, increased latency and even degraded service quality of other APs. This not only affects the user experience, but also limits the throughput and capacity of the entire network. No explicit solution has been proposed yet regarding the problem of channel access fairness among APs in the existing art.

To solve the above problem, the present application proposes that after an AP sends data by multi-access point coordinated transmission, a penalty mechanism is introduced to update a channel contention parameter, e.g., the backoff counter, of the AP. Therefore, the backoff counter with the penalty mechanism applied can reduce the probability of the AP accessing the channel again.

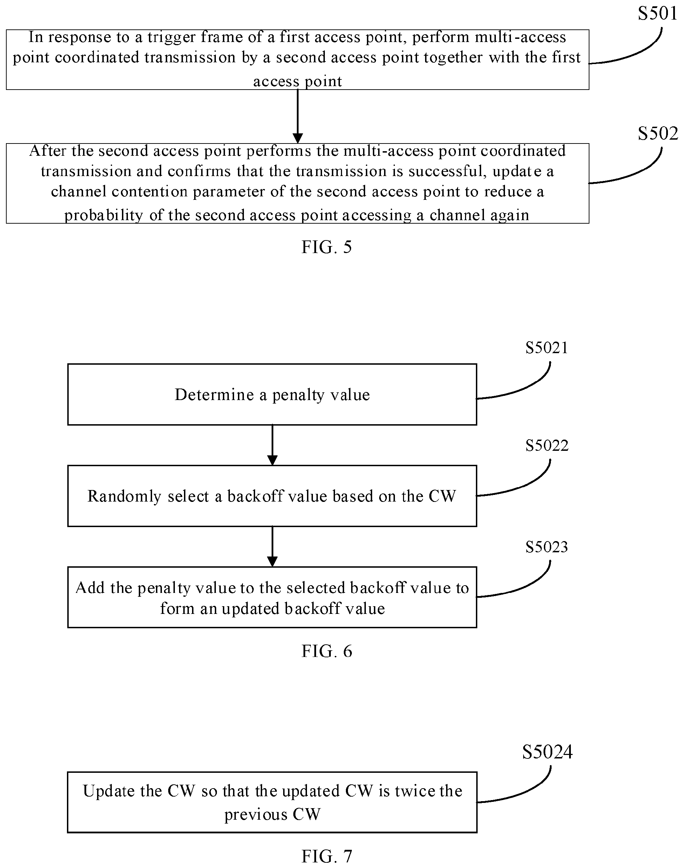

FIG. 5 shows a flowchart of a multi-access point transmission method according to an embodiment of the present disclosure.

As shown in FIG. 5, a multi-access point transmission method according to an embodiment of the present disclosure includes the following operations S501 to S502.

In operation S501, in response to a trigger frame of a first access point, a second access point performs multi-access point coordinated transmission together with the first access point.

In operation S502, after the second access point performs the multi-access point coordinated transmission and confirms that the transmission is successful, a channel contention parameter of the second access point is updated to reduce a probability of the second access point accessing a channel again, where the channel contention parameter is used in contention for channel resources.

According to the multi-access point transmission method provided in the embodiment of the present disclosure, after the second access point (i.e., a slave AP in multi-access point coordinated transmission) performs, in response to the trigger frame of the first access point (i.e., a master AP in multi-access point coordinated transmission), multi-access point coordinated transmission together with the first access point and confirms that the transmission is successful, the channel contention parameter of the second access point is updated to reduce the probability of the second access point accessing the channel again, thereby ensuring the channel access fairness between conventional APs or other APs not adopting coordinated transmission and APs adopting coordinated transmission.

According to an embodiment of the present disclosure, the second access point is a DCF contention entity having a data buffer queue, and performing multi-access point coordinated transmission by the second access point together with the first access point (i.e., operation S501) includes: transmitting data buffered in the data buffer queue of the second access point.

According to an embodiment of the present disclosure, the channel contention parameter may include: a contention window (CW); and a backoff value randomly selected based on the contention window.

It should be appreciated that the channel contention parameter of the AP is not limited to a CW and a backoff value randomly selected based on the CW, but may further include other parameters, such as an arbitration inter frame space (AIFS) and a transmission opportunity (TXOP) duration.

According to an embodiment of the present disclosure, referring to FIG. 6, updating the channel contention parameter of the second access point (i.e., operation S502) includes the following operations S5021 to S5023.

In operation S5021, a penalty value is determined.

In operation S5022, a backoff value is randomly selected based on the CW.

In operation S5023, the penalty value is added to the selected backoff value to form an updated backoff value.

According to the multi-access point transmission method provided in the embodiment of the present disclosure, a penalty mechanism may be implemented by setting a penalty value. After the second access point (i.e., the slave AP in multi-access point coordinated transmission) completes the multi-access point coordinated transmission, a backoff value may be randomly selected for the second access point based on the CW of the second access point, so that the second access point can access the channel next time. By setting the penalty value and adding the penalty value to the backoff value to update the backoff value, the time for the second access point to access the channel again can be reasonably extended, thereby ensuring the channel access fairness between conventional APs or other APs not adopting coordinated transmission and APs adopting coordinated transmission.

According to an embodiment of the present disclosure, the penalty value is determined by one of: determining a remaining backoff value of the second access point before performing the multi-access point coordinated transmission as the penalty value; determining the penalty value based on a priority of the second access point; determining the penalty value based on an indication in the trigger frame of the first access point; or determining the penalty value based on a beacon frame.

Before the second access point performs multi-access point coordinated transmission in response to the trigger frame of the first access point, the second access point is in a backoff state and waits to access the channel. Then, a current backoff value of the backoff counter of the second access point is used as the penalty value for the second access point to access the channel again after completing the multi-access point coordinated transmission, so that the time to access the channel again can be reasonably extended, thereby ensuring the channel access fairness between conventional APs or other APs not adopting coordinated transmission and APs adopting coordinated transmission.

Furthermore, the penalty value may be preset for each access point based on a priority of the access point, so that a corresponding penalty value can be determined based on the priority of the access point.

The penalty value for the second access point may also be determined based on the trigger frame of the first access point (i.e., the master AP in multi-access point coordinated transmission) that initiates the multi-access point coordinated transmission. The trigger frame from the first access point may carry not only indication information for each AP to perform the multi-access point coordinated transmission (i.e., each slave AP in multi-access point coordinated transmission), but also indication information of a penalty value for each AP after completing the multi-access point coordinated transmission.

Furthermore, the penalty value may be determined through a beacon frame. Beacon frames are periodically sent by an AP at certain time intervals to inform the outside world of the presence of a wireless network. According to an embodiment of the present disclosure, the first access point and the second access point may negotiate through their respective beacon frames to determine the penalty value; or the second access point may receive a beacon frame of a master control access point among all access points performing the coordinated transmission, and determine the penalty value based on an indication in the beacon frame of the master control access point.

According to an embodiment of the present disclosure, the APs performing the multi-access point coordinated transmission may be in a peer-to-peer relationship. That is, for the first access point that initiates the multi-access point coordinated transmission and the second access point that performs the multi-access point coordinated transmission in response to the trigger frame of the first access point, although the first access point is used as the master AP in this round of multi-access point coordinated transmission, and configured to schedule the transmissions of other slave APs to ensure cooperation and interoperability among them, the first access point and the second access point may be in a peer-to-peer relationship, since the current second access point may also be used as the master AP in a next round of multi-access point coordinated transmission. Therefore, the first access point and the second access point may negotiate through their respective beacon frames to determine their respective penalty values.

According to an embodiment of the present disclosure, a master control AP may be present among the APs performing multi-access point coordinated transmission, and configured to manage the other APs performing multi-access point coordinated transmission. Therefore, the second access point may receive a beacon frame from the master control AP, and determine the penalty value based on an indication in the beacon frame of the master control AP.

According to another embodiment of the present disclosure, referring to FIG. 7, updating the channel contention parameter of the second access point (i.e., operation S502) includes the following operation S5024.

In operation S5024, the CW is updated so that the updated CW is twice the previous CW.

According to the multi-access point transmission method provided in the embodiment of the present disclosure, the penalty mechanism can be implemented by doubling the contention window. After the second access point (i.e., the slave AP in multi-access point coordinated transmission) completes the multi-access point coordinated transmission, the CW of the second access point is updated to double the previous value, and a backoff value is randomly selected for the second access point based on the updated CW to reasonably extend the time for the second access point to access the channel again, thereby ensuring the channel access fairness between conventional APs or other APs not adopting coordinated transmission and APs adopting coordinated transmission.

According to an embodiment of the present disclosure, after the second access point completes the multi-access point coordinated transmission, the second access point may perform backoff using the remaining backoff value before performing the multi-access point coordinated transmission, and after the second access point accesses the channel again, a new backoff value is randomly selected for the second access point based on the updated CW.

According to another embodiment of the present disclosure, after the second access point completes the multi-access point coordinated transmission and before the second access point accesses the channel again, a new backoff value is randomly selected for the second access point based on the updated CW.

Embodiments of the present disclosure provide two timings for selecting a backoff value for the second access point using the doubled CW. One is to continue using a remaining backoff value for backoff after the second access point completes the multi-access point coordinated transmission (i.e., not performing the penalty immediately), and select a backoff value for the second access point using the doubled CW after the second access point accesses the channel again; and the other is to select a backoff value for the second access point using the doubled CW after the second access point completes the multi-access point coordinated transmission and before the second access point accesses the channel again (i.e., performing the penalty immediately), instead of continuing to use the remaining backoff value before the second access point performs the multi-access point coordinated transmission.

According to an embodiment of the present disclosure, the second access point may be an AP supporting the EDCA mechanism. Therefore, the second access point may include a plurality of access categories (ACs), each of which has an independent data buffer queue and may be used as an independent DCF contention entity including an independent backoff entity. Therefore, the backoff entity of each AC is associated with the corresponding data buffer queue and calculates the corresponding queue backoff value, thereby obtaining data transmission opportunities over at least one channel. In this case, performing multi-access point coordinated transmission by the second access point together with the first access point (i.e., operation S501) includes: selecting, by the second access point, an AC for the multi-access point coordinated transmission; and transmitting data buffered in the data buffer queue of the AC selected for multi-access point coordinated transmission.

According to an embodiment of the present disclosure, the second access point may select the AC for the multi-access point coordinated transmission by one of: randomly selecting an AC having a non-empty data buffer queue; selecting an AC based on an indication in the trigger frame; selecting an AC having a minimum backoff value; or selecting an AC having a highest priority.

It should be appreciated that the method for selecting the AC for multi-access point coordinated transmission is not limited thereto, and other AC selection methods may be adopted according to the specific implementation requirements.

According to an embodiment of the present disclosure, each AC has a set of channel contention parameters with values associated with a priority of the AC and including: a contention window (CW); and a backoff value randomly selected based on the contention window.

It should be appreciated that the channel contention parameter of the AC is not limited to CW and a backoff value randomly selected based on the CW, but may further include other parameters, such as an AIFS and a TXOP duration.

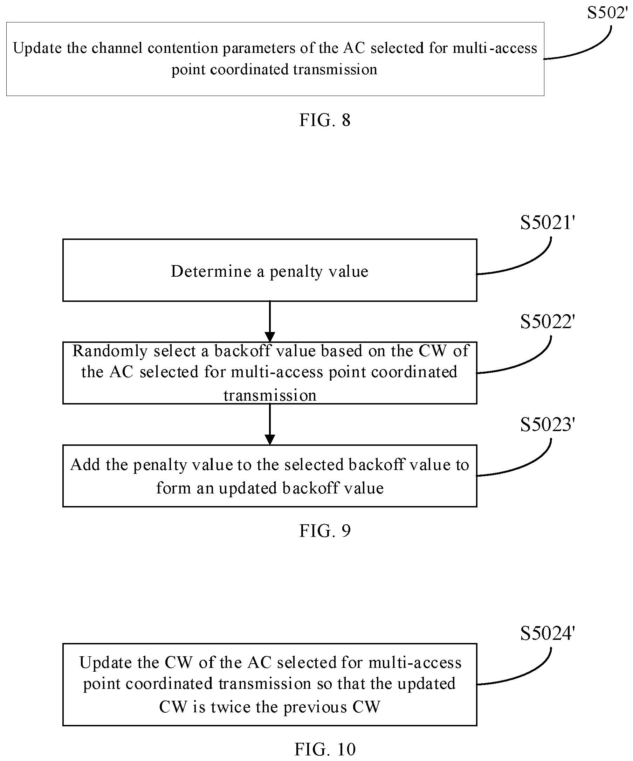

According to an embodiment of the present disclosure, referring to FIG. 8, updating the channel contention parameter of the second access point (i.e., operation S502) includes the following operation S502'.

In operation S502', the channel contention parameters of the AC selected for multi-access point coordinated transmission are updated.

The channel contention parameters of the AC may be updated in a manner similar to that for updating the channel contention parameter of the second access point described with reference to FIGs. 6 and 7. Detailed description thereof will be omitted below to avoid repetition.

According to an embodiment of the present disclosure, referring to FIG. 9, updating the channel contention parameters of the AC selected for multi-access point coordinated transmission (i.e., operation S502') includes the following operations S5021' to S5023'.

In operation S5021', a penalty value is determined.

In operation S5022', a backoff value is randomly selected based on the CW of the AC selected for multi-access point coordinated transmission.

In operation S5023', the penalty value is added to the selected backoff value to form an updated backoff value.

According to an embodiment of the present disclosure, the penalty value is determined by one of: determining a remaining backoff value of the AC selected for multi-access point coordinated transmission before performing the multi-access point coordinated transmission as the penalty value; determining the penalty value based on a priority of the AC selected for multi-access point coordinated transmission; determining the penalty value based on an indication in the trigger frame of the first access point; or determining the penalty value based on a beacon frame.

According to an embodiment of the present disclosure, the first access point and the second access point may negotiate through their respective beacon frames to determine the penalty value; or the second access point may receive a beacon frame of a master control access point among all access points performing the coordinated transmission, and determine the penalty value based on an indication in the beacon frame of the master control access point.

The AC may be used as an independent contention entity but not an independent interaction entity, and therefore, interaction and negotiation of beacon frames need to be completed between APs.

According to another embodiment of the present disclosure, referring to FIG. 10, updating the channel contention parameters of the AC selected for multi-access point coordinated transmission (i.e., operation S502') includes the operation S5024'.

In operation S5024', the CW of the AC selected for multi-access point coordinated transmission is updated so that the updated CW is twice the previous CW.

According to an embodiment of the present disclosure, after the AC selected for multi-access point coordinated transmission completes the multi-access point coordinated transmission, the AC selected for multi-access point coordinated transmission performs backoff using the remaining backoff value before performing the multi-access point coordinated transmission, and after the AC accesses the channel again, a new backoff value is randomly selected for the AC based on the updated CW.

According to another embodiment of the present disclosure, after the AC selected for multi-access point coordinated transmission completes the multi-access point coordinated transmission, and before the AC accesses the channel again, a new backoff value is randomly selected for the AC based on the updated CW.

According to the multi-access point transmission method provided in the embodiment of the present disclosure, when the second access point is an AP supporting the EDCA mechanism, the AC selected by the second access point for multi-access point coordinated transmission may be penalized to reduce the probability of the AC accessing the channel again, thereby ensuring the channel access fairness between conventional APs or other APs not adopting coordinated transmission and APs adopting coordinated transmission.

According to another embodiment of the present disclosure, when the second access point is an AP supporting the EDCA mechanism, after the second access point selects, in response to the trigger frame of the first access point, an AC for multi-access point coordinated transmission to perform multi-access point coordinated transmission together with the first access point, and confirms that the transmission is successful, all ACs of the second access point may be penalized.

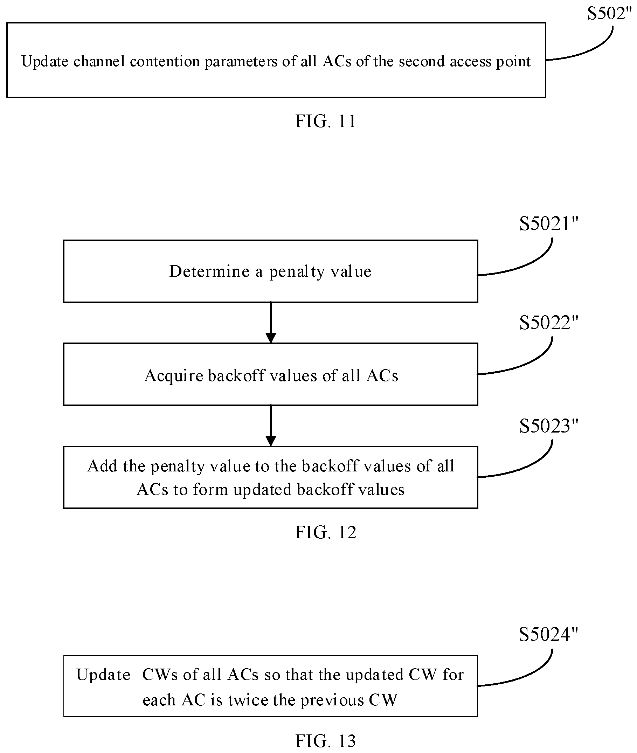

Referring to FIG. 11, updating the channel contention parameter of the second access point (i.e., operation S502) includes the following operation S502".

In operation S502", channel contention parameters of all ACs of the second access point are updated.

The channel contention parameters of all ACs may be updated in a manner similar to that for updating the channel contention parameters of the AC for multi-access point coordinated transmission described with reference to FIGs. 9 and 10. Detailed description thereof will be omitted below to avoid repetition.

According to an embodiment of the present disclosure, referring to FIG. 12, updating channel contention parameters of all ACs of the second access point (i.e., operation S502") includes the following operations S5021" to S5023".

In operation S5021", a penalty value is determined.

In operation S5022", backoff values of all ACs are acquired.

In operation S5023", the penalty value is added to the backoff values of all ACs to form updated backoff values.

According to an embodiment of the present disclosure, the penalty value is determined by one of: determining a remaining backoff value of the AC selected for multi-access point coordinated transmission before performing the multi-access point coordinated transmission as the penalty value; determining a penalty value corresponding to each AC according to a priority of each AC; determining the penalty value based on an indication in the trigger frame of the first access point; or determining the penalty value based on a beacon frame.

According to an embodiment of the present disclosure, the first access point and the second access point may negotiate through their respective beacon frames to determine the penalty value; or the second access point may receive a beacon frame of a master control access point among all access points performing the coordinated transmission, and determine the penalty value based on an indication in the beacon frame of the master control access point.

According to another embodiment of the present disclosure, referring to FIG. 13, updating channel contention parameters of all ACs of the second access point (i.e., operation S502") includes the operation S5024".

In operation S5024", CWs of all ACs are updated so that the updated CW for each AC is twice the previous CW.

According to an embodiment of the present disclosure, when the CW of each AC is updated, each AC performs backoff using a current backoff value thereof, and after each AC accesses the channel, a new backoff value is randomly selected for each AC based on the updated CW.

According to another embodiment of the present disclosure, after the CW of each AC is updated, and before each AC accesses the channel, a new backoff value is randomly selected for each AC based on the updated CW.

According to the multi-access point transmission method provided in the embodiment of the present disclosure, when the second access point is an AP supporting the EDCA mechanism, all ACs of the second access point may be penalized so that the second access point ultimately experiences a full backoff time length on average, thereby ensuring the channel access fairness between conventional APs or other APs not adopting coordinated transmission and APs adopting coordinated transmission.

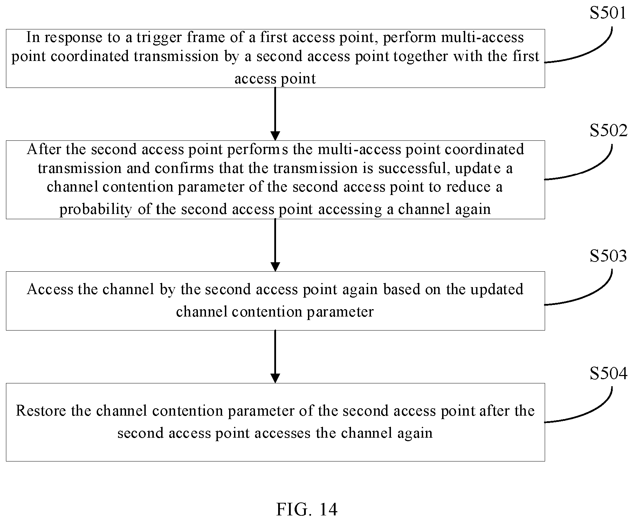

Referring to FIG. 14, the multi-access point transmission method according to the embodiment of the present disclosure further includes the following operations S503 to S504.

In operation S503, the second access point accesses the channel again based on the updated channel contention parameter.

In operation S504, the channel contention parameter of the second access point is restored after the second access point accesses the channel again.

The second access point may use the updated channel contention parameter to access the channel via the CSMA/CA mechanism or the EDCA mechanism. When the channel becomes idle during a backoff slot or AIFS period, the backoff value of the backoff counter is reduced by 1. Completion of the backoff of the second access point (or one or more ACs of the second access point) is determined when the backoff value of the backoff counter reaches 0. If the backoff value of the backoff counter has not reached 0, the second access point waits for a next backoff slot and detects whether the channel is idle. If the backoff of the second access point (or at least one AC of the second access point) is completed, the second access point accesses the channel, or the second access point selects an AC with the highest priority among the ACs that complete the backoff to access the channel.

Since the second access point accesses the channel again using the updated channel contention parameter, i.e., the penalty on the second access point is completed, the channel contention parameter of the second access point may be restored after the second access point accesses the channel again. In other words, when the second access point is an AP supporting the EDCA mechanism, the channel contention parameters of one or more ACs of the second access point are restored.

An embodiment of the present disclosure further provides an access point device, including: a communication unit, a processor, and a memory. The memory has a computer program stored thereon, and the computer program, when executed by the processor, causes the processor to implement the multi-access point transmission method according to any embodiment of the present disclosure.

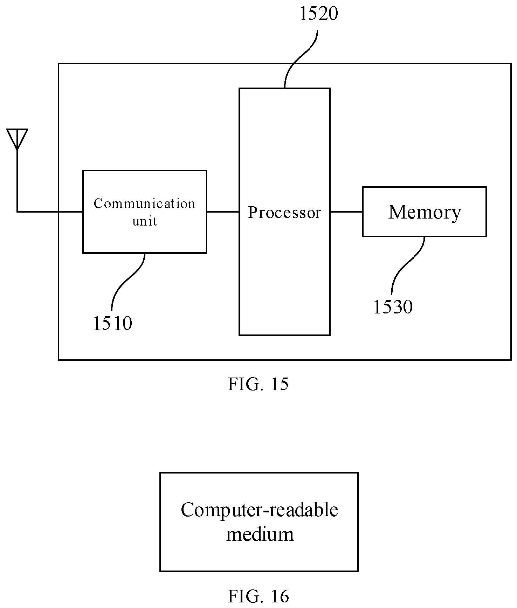

Referring to FIG. 15, an embodiment of the present disclosure further provides an access point device, including: a communication unit 1510, a processor 1520, and a memory 1530 storing a computer program thereon which, when executed by a processor 1520, causes the processor 1520 to implement the multi-access point transmission method according to any embodiment of the present disclosure.

The communication unit 1510 may be hardware, software, firmware, or other components of the access point for sending and receiving wireless signals. The communication unit 1510 includes one or more communication modules for different frequency bands (e.g., 2.4GHz, 5GHz and 6GHz). The communication unit 1510 may operate only one communication module at a time, or operate multiple communication modules simultaneously. Multiple communication modules may be integrated into one chip. Furthermore, the communication module may include a radio frequency module for processing radio frequency signals. The communication unit 1510 may further provide an 802.3 Ethernet interface so that the access point can communicate with conventional Ethernet-based computer networks.

The processor 1520 is configured to execute various commands or programs and process data to be sent or received. Furthermore, the processor 1520 controls data sending and receiving of various modules, such as the communication unit 1510. The processor 1520 may be a modem configured to modulate wireless signals sent to the communication unit 1510, and demodulate wireless signals received from the communication unit 1510. The processor 1520 may be implemented as a general-purpose processor, a digital signal processor (DSP), an application specific integrated circuit (ASIC), a field programmable gate array (FPGA), or any combination thereof for performing the functions described in the present application.

The memory 1530 stores control programs and various data used in the AP. The memory 1530 may be implemented as a random access memory (RAM, more specifically SDRAM, DDR, or the like), a flash memory (FLASH), a read-only memory (ROM), an electrically erasable programmable read-only memory (EEPROM), a register (REGISTER), a hard disk (HD), a removable disk, a CD-ROM, or any other form of storage medium known in the art. The memory 1530 may be coupled to the processor 1520 so that the processor 1520 can read information from, and write information to, the memory 1530. In some embodiments, the memory 1530 may include a cache used for storing temporary variables or other intermediate information during execution of instructions by the processor 1520. The memory 1530 may further include a non-volatile memory for storing instructions to be executed by the processor 1520. When the access point device is powered on, one or more programs stored on the hard disk or read-only memory are transferred to a random access memory and a register storing variables and parameters required by the present disclosure.

Referring to FIG. 16, an embodiment of the present disclosure further provides a computer-readable storage medium having a computer program stored thereon which, when executed by a processor, causes the processor to implement the multi-access point transmission method according to any embodiment of the present disclosure.

Those of ordinary skill in the art will appreciate that all or some operations of the methods, systems and function modules/units in the devices described above may be implemented as software, firmware, hardware, and suitable combinations thereof. In a hardware implementation, the division between the function modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, a RAM, a ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those of ordinary skill in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A multi-access point transmission method, comprising:
in response to a trigger frame of a first access point, performing multi-access point coordinated transmission by a second access point together with the first access point; and
after the second access point performs the multi-access point coordinated transmission and confirms that the multi-access point coordinated transmission is successful, updating a channel contention parameter of the second access point to reduce a probability of the second access point accessing a channel again, where the channel contention parameter is used in contention for channel resources.

2. The multi-access point transmission method according to claim 1, wherein the second access point is a distributed coordination function (DCF) contention entity having a data buffer queue, and performing multi-access point coordinated transmission by the second access point together with the first access point comprises:
transmitting data buffered in the data buffer queue of the second access point.

3. The multi-access point transmission method according to claim 2, wherein the channel contention parameter comprises: a contention window (CW); and a backoff value randomly selected based on the CW.

4. The multi-access point transmission method according to claim 3, wherein updating the channel contention parameter of the second access point comprises:
determining a penalty value;
randomly selecting a backoff value based on the CW; and
adding the penalty value to the selected backoff value to form an updated backoff value.

5. The multi-access point transmission method according to claim 4, wherein the penalty value is determined by one of:
determining a remaining backoff value of the second access point before performing the multi-access point coordinated transmission as the penalty value;
determining the penalty value based on a priority of the second access point;
determining the penalty value based on an indication in the trigger frame; or
determining the penalty value based on a beacon frame.

6. The multi-access point transmission method according to claim 5, wherein the first access point and the second access point negotiate through their respective beacon frames to determine the penalty value, or
the second access point receives a beacon frame of a master control access point among all access points performing the multi-access point coordinated transmission, and determines the penalty value based on an indication in the beacon frame of the master control access point.

7. The multi-access point transmission method according to claim 3, wherein updating the channel contention parameter of the second access point comprises:
updating the CW so that the updated CW is twice the previous CW.

8. The multi-access point transmission method according to claim 7, wherein after the second access point completes the multi-access point coordinated transmission, the second access point performs backoff using a remaining backoff value before performing the multi-access point coordinated transmission, and after the second access point accesses the channel again, a new backoff value is randomly selected for the second access point based on the updated CW.

9. The multi-access point transmission method according to claim 7, wherein after the second access point completes the multi-access point coordinated transmission and before the second access point accesses the channel again, a new backoff value is randomly selected for the second access point based on the updated CW.

10. The multi-access point transmission method according to claim 1, wherein the second access point comprises a plurality of access categories (ACs), each of which is an independent distributed coordination function (DCF) contention entity and has an independent data buffer queue, and performing multi-access point coordinated transmission by the second access point together with the first access point comprises:
selecting, by the second access point, an AC for the multi-access point coordinated transmission; and
transmitting data buffered in the data buffer queue of the AC selected for multi-access point coordinated transmission.

11. The multi-access point transmission method according to claim 10, wherein the second access point selects the AC for the multi-access point coordinated transmission by one of:
randomly selecting an AC having a non-empty data buffer queue;
selecting an AC based on an indication in the trigger frame;
selecting an AC having a minimum backoff value; or
selecting an AC having a highest priority.

12. The multi-access point transmission method according to claim 10, wherein each AC has a set of channel contention parameters comprising: a contention window (CW); and a backoff value randomly selected based on the CW.

13. The multi-access point transmission method according to claim 12, wherein updating the channel contention parameter of the second access point comprises:
updating the channel contention parameters of the AC selected for multi-access point coordinated transmission.

14. The multi-access point transmission method according to claim 13, wherein updating the channel contention parameters of the AC selected for multi-access point coordinated transmission comprises:
determining a penalty value;
randomly selecting a backoff value based on the CW of the AC selected for multi-access point coordinated transmission; and
adding the penalty value to the selected backoff value to form an updated backoff value.

15. The multi-access point transmission method according to claim 14, wherein the penalty value is determined by one of:
determining a remaining backoff value of the AC selected for multi-access point coordinated transmission before performing the multi-access point coordinated transmission as the penalty value;
determining the penalty value based on a priority of the AC selected for multi-access point coordinated transmission;
determining the penalty value based on an indication in the trigger frame; or
determining the penalty value based on a beacon frame.

16. The multi-access point transmission method according to claim 15, wherein the first access point and the second access point negotiate through their respective beacon frames to determine the penalty value, or
the second access point receives a beacon frame of a master control access point among all access points performing the coordinated transmission, and determines the penalty value based on an indication in the beacon frame of the master control access point.

17. The multi-access point transmission method according to claim 13, wherein updating the channel contention parameters of the AC selected for multi-access point coordinated transmission comprises:
updating the CW of the AC selected for multi-access point coordinated transmission so that the updated CW is twice the previous CW.

18. The multi-access point transmission method according to claim 17, wherein after the AC selected for multi-access point coordinated transmission completes the multi-access point coordinated transmission, the AC selected for multi-access point coordinated transmission performs backoff using a remaining backoff value before performing the multi-access point coordinated transmission, and after the AC accesses the channel again, a new backoff value is randomly selected for the AC based on the updated CW.

19. The multi-access point transmission method according to claim 17, wherein after the AC selected for multi-access point coordinated transmission completes the multi-access point coordinated transmission, and before the AC accesses the channel again, a new backoff value is randomly selected for the AC based on the updated CW.

20. The multi-access point transmission method according to claim 12, wherein updating the channel contention parameter of the second access point comprises:
updating channel contention parameters of all ACs of the second access point.

21. The multi-access point transmission method according to claim 20, wherein updating channel contention parameters of all ACs of the second access point comprises:
determining a penalty value;
obtaining respective backoff values of all ACs; and
adding the penalty value to the respective backoff values of all ACs to form updated backoff values.

22. The multi-access point transmission method according to claim 21, wherein the penalty value is determined by one of:
determining a remaining backoff value of the AC selected for multi-access point coordinated transmission before performing the multi-access point coordinated transmission as the penalty value;
determining a penalty value corresponding to each AC according to a priority of each AC;
determining the penalty value based on an indication in the trigger frame; or
determining the penalty value based on a beacon frame.

23. The multi-access point transmission method according to claim 22, wherein the first access point and the second access point negotiate through their respective beacon frames to determine the penalty value, or
the second access point receives a beacon frame of a master control access point among all access points performing the coordinated transmission, and determines the penalty value based on an indication in the beacon frame of the master control access point.

24. The multi-access point transmission method according to claim 20, wherein updating channel contention parameters of all ACs of the second access point comprises:
updating CWs of all ACs so that the updated CW for each AC is twice the previous CW.

25. The multi-access point transmission method according to claim 24, wherein after the CW of each AC is updated, each AC performs backoff using a current backoff value thereof, and after each AC accesses the channel, a new backoff value is randomly selected for each AC based on the updated CW.

26. The multi-access point transmission method according to claim 24, wherein after the CW of each AC is updated, and before each AC accesses the channel, a new backoff value is randomly selected for each AC based on the updated CW.

27. The multi-access point transmission method according to claim 1, further comprising:
accessing, by the second access point, the channel again based on the updated channel contention parameter; and
restoring the channel contention parameter of the second access point after the second access point accesses the channel again.

28. An access point device, comprising: a communication unit, a processor, and a memory, wherein
the memory has a computer program stored thereon, and
the computer program, when executed by the processor, causes the processor to implement the multi-access point transmission method according to any one of claims 1 to 27.

29. A computer-readable storage medium having a computer program stored thereon which, when executed by a processor, causes the processor to implement the multi-access point transmission method according to any one of claims 1 to 27.
